# EUROPÄISCHE PATENTSCHRIFT

(11) **EP 4 325 103 B1**
(45) Veröffentlichungstag und Bekanntmachung des Hinweises auf die Patenterteilung: **08.10.2025**
(21) Anmeldenummer: 22191248.8
(22) Anmeldetag: 19.08.2022
(51) Int. Cl.: F16K 11/18, F16K 11/16, F16K 11/12, F16K 31/04, F16K 5/04, F01P 7/14, F16K 11/085

(54) **ROTATIONSVENTIL**
ROTARY VALVE
SOUPAPE ROTATIVE

(43) Veröffentlichungstag der Anmeldung: 21.02.2024
(73) Patentinhaber: TI Automotive Technology Center GmbH, 76437 Rastatt (DE)
(72) Erfinder: Göller, Johannes, 74679 Crispenhofen (DE); Boecker, Albert, 76275 Ettlingen (DE); Winter, Matthias, 76227 Karlsruhe (DE); Tuzin, Artem, 76297 Stutensee (DE)
(74) Vertreter: Novagraaf Group

(56) Entgegenhaltungen:
- WO-A1-2017/217112
- DE-A1- 102019 005 163

## Beschreibung

Die Erfindung betrifft ein Rotationsventil, umfassend ein Ventilgehäuse mit einer Ventilkammer, wobei die Ventilkammer eine Kammerwand aufweist, in die zumindest zwei Fluidöffnungen eingebracht sind, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch in der Ventilkammer gelagert ist.

Ein derartiges Rotationsventil ist beispielsweise aus der DE 10 2018 009 680 A1 bekannt. Rotationsventile der genannten Art finden häufig in Kühlkreisläufen zur Steuerung des Kühlmittelstroms Einsatz. Durch die in das Ventilgehäuse eingebrachten Fluidöffnungen kann ein Kühlfluid ein- und ausströmen. Die in den Ventilkern eingebrachte Kanalstruktur steuert dabei den Kühlmittelstrom, wobei je nach Ausgestaltung und Anzahl der Fluidöffnungen unterschiedliche Kühlkreisläufe angesteuert, der Volumenstrom reguliert oder die Durchflussrichtung angepasst werden können.

Die Ausgestaltung als Rotationsventil ist dabei vorteilhaft, weil eine Anpassung des Kühlmittelstroms durch Drehen des Ventilkerns erfolgt, wobei der entsprechende Aktor zum Drehen des Ventilkerns einfach ausgebildet und einfach ansteuerbar ist. Dementsprechend sind Rotationsventile und die dazugehörigen Aktoren kostengünstig herstellbar. Darüber hinaus benötigen Rotationsventile nur wenig Bauraum.

Derartige Rotationsventile sind insbesondere vorteilhaft in Bezug auf den Einsatz in Temperierkreisläufen im Bereich der Elektromobilität. Zur Erzielung einer hohen Reichweite von Elektrofahrzeugen ist es beispielsweise erforderlich, elektrische Komponenten zu temperieren. Zu temperierende Komponenten von Elektrofahrzeugen sind dabei insbesondere elektrische Energiespeicher, aber auch die Leistungselektronik oder Steckverbindungen von Schnellladeeinrichtungen. Ein elektrischer Energiespeicher hat eine bestmögliche Kapazität nur in einem sehr kleinen Temperaturspektrum. Daher ist es erforderlich, elektrische Energiespeicher von Elektrofahrzeugen bei tiefen Umgebungstemperaturen zu erwärmen und bei hohen Außentemperaturen oder bei hohen Lastwechseln zu kühlen.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung abgekühlt werden. Die Steuerung des Temperiermediumstroms erfolgt dabei zumindest teilweise über ein Rotationsventil. Dabei kann sich das Erfordernis komplexer Kanalstrukturen des Ventilkerns ergeben.

Die WO 2017/217112 A1 zeigt ein Rotationsventil, bei dem in dem Ventilgehäuse mehrere Ventilkerne ineinander geschachtelt angeordnet sind. Die DE 10 2019 005 163 A1 zeigt ein Rotationsventil, bei dem Ventilkerne über Mitnehmer gekoppelt sind.

Der Erfindung liegt die Aufgabe zugrunde, ein Rotationsventil bereitzustellen, welches kostengünstig herstellbar ist und welches eine komplexe Steuerung von Temperierkreisläufen ermöglicht.

Diese Aufgabe wird mit den Merkmalen von Anspruch 1 gelöst. Auf vorteilhafte Ausgestaltungen nehmen die Unteransprüche Bezug.

Das erfindungsgemäße Rotationsventil umfasst ein Ventilgehäuse mit einer Ventilkammer, wobei die Ventilkammer eine Kammerwand aufweist, in die zumindest zwei Fluidöffnungen eingebracht sind, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch in der Ventilkammer gelagert und über eine Antriebswelle in Rotation versetzbar ist, wobei der Ventilkern mehrteilig ausgebildet ist und zumindest ein erstes Ventilkernelement und ein zweites Ventilkernelement aufweist, wobei das erste Ventilkernelement eine erste Kanalstruktur und das zweite eine Ventilkernelement eine zweite Kanalstruktur aufweist, wobei das erste Ventilkernelement und das zweite Ventilkernelement mit der Antriebswelle wirkverbunden sind.

Durch die mehrteilige Ausgestaltung des Ventilkerns ist es möglich, komplexe Steuerungen von Temperierkreisläufen zu realisieren. Das erste Ventilkernelement und das zweite Ventilkernelement sind mit Kanalstrukturen versehen, die unabhängig voneinander mit den jeweiligen Fluidöffnungen zusammenwirken können. Dementsprechend kann ein erster Temperierkreislauf über die Kanalstruktur des ersten Ventilkernelementes und ein zweiter Temperierkreislauf über die Kanalstruktur des zweiten Ventilkernelementes realisiert werden. Das erste Ventilkernelement und das zweite Ventilkernelement sind mit der Antriebswelle wirkverbunden, wobei die beiden Ventilkernelemente unabhängig voneinander drehbar sein können. Das bedeutet, dass wahlweise nur das erste Ventilkernelement oder nur das zweite Ventilkernelement oder beide Ventilkernelemente durch Rotationsbewegung der Antriebswelle verdreht werden können. Dadurch ist es möglich, komplexe Steuerungen von verschiedenen Temperierkreisläufen mit einfachen Mitteln kostengünstig zu realisieren.

Das erste Ventilkernelement ist erfindungsgemäß über eine erste Kupplung mit der Antriebswelle wirkverbunden. Die Kupplung überträgt das Drehmoment der Antriebswelle auf das erste Ventilkernelement. Dabei kann die Kupplung so ausgestaltet sein, dass der Kraftfluss wahlweise unterbrochen ist, sodass bei einer Drehung der Antriebswelle kein Drehmomentübertrag und entsprechend auch keine Rotation des Ventilkernelementes erfolgt.

Das zweite Ventilkernelement ist erfindungsgemäß über eine zweite Kupplung mit der Antriebswelle wirkverbunden. Je nach Anforderung an die Steuerung des Temperierkreislaufs ist denkbar, dass nur das erste Ventilkernelement mit einer Kupplung versehen ist oder nur das zweite Ventilkernelement mit einer Kupplung versehen ist oder dass beide Ventilkernelemente jeweils mit einer Kupplung versehen sind. Insbesondere die Ausgestaltung mit zwei Kupplungen ermöglicht eine besonders flexible und komplexe Steuerung von verschiedenen Temperierkreisläufen. Die Ausgestaltung mit jeweils nur einer Kupplung ist kostengünstig.

Die erste Kupplung und die zweite Kupplung sind als Freilaufkupplung ausgebildet. Eine als Freilauf ausgestaltete Kupplung überträgt ein Drehmoment lediglich in einer Drehrichtung, wohingegen in der entgegengesetzten Drehrichtung kein Drehmomentübertrag erfolgt. Ein Freilauf ist eine passive Kupplung und ermöglicht Schaltvorgänge ohne Einsatz von Hilfsenergie. Alternativ ist denkbar, dass die Kupplungen als Schaltkupplungen ausgebildet sind und beispielsweise über einen Aktor geschaltet werden.

Der Freilauf der ersten Kupplung überträgt in einer ersten Drehrichtung ein Drehmoment. Der Freilauf der zweiten Kupplung überträgt in einer zweiten Drehrichtung, die der ersten Drehrichtung entgegengesetzt ist, ein Drehmoment. Bei dieser Ausgestaltung bewirkt eine Drehung der Antriebswelle in einer ersten Richtung ein Verdrehen nur eines Ventilkernelementes und eine Drehung in der entgegengesetzten Richtung ein Verdrehen des anderen Ventilkernelementes. Dadurch verharrt bei einer Drehung der Antriebswelle ein Ventilkernelement in einer Position, wohingegen das andere Ventilkernelement die Position verändert. Dadurch können mit einfachen Mitteln komplexe Schaltvorgänge realisiert werden.

Es können Rastelemente vorgesehen sein. Diese können derart ausgestaltet sein, dass diese an vorgegeben rotatorischen Positionen ein erhöhtes Drehmoment für die Drehbewegung der Ventilkernelemente verursachen. Dadurch kann ungewollten Drehbewegungen der Ventilkernelemente, beispielsweise aufgrund von Fluidkräften, Vibrationen oder sonstigen Einflüsse wie Schleppmomenten, entgegengewirkt werden. Die Reibung des Ventilkerns an der Kammerwand kann zur Vermeidung ungewollter Drehbewegungen genutzt werden.

Das Rotationsventil kann mit einem oder mehreren Sensoren zur Positionsbestimmung der Ventilkernelemente ausgerüstet sein. Die Sensoren ermöglichen die Erfassung der Winkelstellung der Ventilkernelemente, was beispielsweise über eine Druck-, Fluidstrom- oder Positionsmessung erfolgen kann.

Wird durch die Sensoren ein Positionsverlust ermittelt können die Ventilkernelemente über eine Regelung wieder in die richtige Position gebracht werden.

Die Freilaufkupplung kann so ausgebildet sein, dass diese nur an vorbestimmten Anzahl Positionen einrastet. Diese Ausgestaltung ermöglicht einen Freilauf über eine kleine Wegstrecke auch in der Drehrichtung, in der das Drehmoment übertragen wird. Dies ermöglicht eine Positionsüberwachung ohne zusätzliche Sensoren.

Das erste Ventilkernelement und das zweite Ventilkernelement sind erfindungsgemäß über ein Rastmittel miteinander wirkverbunden. Das Rastmittel kann dabei so ausgebildet sein, dass sich die beiden Ventilkernelemente in einer Rotationsrichtung unabhängig voneinander verdrehen können und in einer zweiten Rotationsrichtung miteinander verrasten, sodass die beiden Ventilkernelemente in der zweiten Rotationsrichtung gleichermaßen gedreht werden. Bei dieser Ausgestaltung kann ein Ventilkernelement in beiden Drehrichtungen gedreht werden, während das andere Ventilkernelement lediglich in einer Drehrichtung rotieren kann.

Das erste Ventilkernelement und das zweite Ventilkernelement können in Längsrichtung betrachtet, also in Richtung der Rotationsachse, übereinander angeordnet sein. Bei dieser Ausgestaltung sind die Ventilkernelemente in dem Ventilgehäuse gestapelt angeordnet und die Kanalstrukturen der beiden Ventilkernelemente stehen vorzugsweise unabhängig voneinander jeweils mit Fluidöffnungen in Verbindung. Diese Ausgestaltung ist besonders gut für das Ansteuern mehrere voneinander unabhängiger Temperierkreisläufe geeignet. Dabei kann das erste Ventilkernelement einen ersten Temperierkreislauf und dass zweite Ventilkernelement einen zweiten Temperierkreislauf beeinflussen.

Gemäß einer alternativen Ausgestaltung sind das erste Ventilkernelement und das zweite Ventilkernelement radial ineinander geschachtelt. Bei dieser Ausgestaltung weist ein Ventilkernelement eine konzentrische Ausnehmung auf, in der das weitere Ventilkernelement angeordnet ist. Bei dieser Ausgestaltung können die Kanalstrukturen der beiden Ventilkernelemente miteinander in Verbindung gebracht werden und es können besonders komplexe Kanalstrukturen realisiert werden.

Gemäß einer weiteren alternativen Ausgestaltung sind mehrere Ventilkernelemente vorgesehen, von denen Ventilkernelemente in Längsrichtung betrachtet übereinander angeordnet sind und weitere Ventilkernelemente ineinander geschachtelt sind.

Das Ventilgehäuse kann mehrteilig ausgebildet sein. Bei dieser Ausgestaltung ist insbesondere denkbar, dass das erste Ventilkernelement einem ersten Ventilgehäuseteil und das zweite Ventilkernelement einem zweiten Ventilgehäuseteil zugeordnet ist. Bei dieser Ausgestaltung ist es besonders einfach möglich, verschiedene Stoffströme voneinander zu trennen, sodass ein erster Stoffstrom durch das erste Ventilkernelement strömt und ein zweiter Stoffstrom durch das zweite Ventilkernelement. Durch die mehrteilige Ausgestaltung des Ventilgehäuses können interne Leckagen vermieden werden.

Einige Ausgestaltungen des erfindungsgemäßen Rotationsventils werden nachfolgend anhand der Figuren näher erläutert Diese zeigen, jeweils schematisch:
- Fig. 1: im Schnitt ein Rotationsventil mit zwei in Längsrichtung übereinander angeordneten Ventilkernelementen;
- Fig. 2: das Rotationsventil gemäß Fig. 1 mit Rastmittel;
- Fig. 3: ein Rotationsventil mit mehrteiligem Ventilgehäuse;
- Fig. 4: ein Rotationsventil mit ineinander geschachtelten Ventilkernelementen.

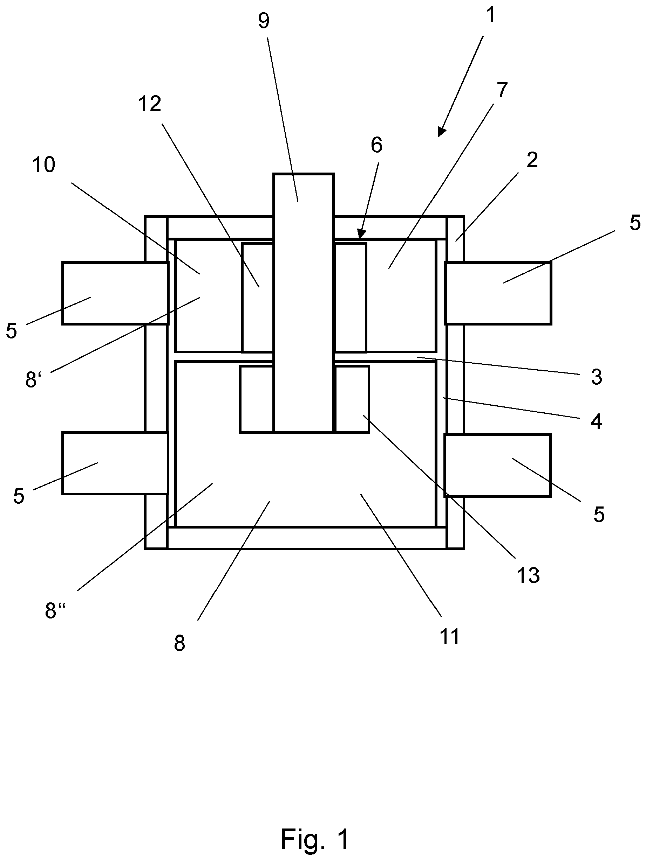

Figur 1 zeigt ein Rotationsventil 1, welches einen Bestandteil eines Temperierkreislaufs einer zu klimatisierenden Inneneinrichtung bildet. Vorliegend gelangt das Rotationsventil 1 in elektromobilen Anwendungen als Bestandteil des Temperierkreislaufs eines Elektrofahrzeugs zum Einsatz. Das Rotationsventil 1 ist dabei in einen Temperierkreislauf eines elektromotorischen Antriebs eines Elektrofahrzeugs eingebunden und lenkt Volumenströme des in den Temperierkreislauf geführten Mediums zu den elektrischen Energiespeichern und Elektromotoren sowie zur Leistungselektronik. Durch das Rotationsventil 1 können die Temperiermittelströme des Temperierkreislaufs gesteuert werden.

Insbesondere ist es denkbar, den Volumenstrom des Temperiermittels zu modifizieren, beispielsweise zu vergrößern oder zu verkleinern. Des Weiteren kann durch Drehung des Ventilkerns 7 unterschiedliche Fluidöffnungen 5 strömungsleitend verbunden und so die Strömungsrichtung des Temperiermittels geändert werden oder andere Komponenten des Temperierkreislaufs angesteuert werden. Insofern bildet das erfindungsgemäße Rotationsventil 1 auch ein Wegeventil, durch das verschiedene Komponenten der zu temperierenden Einrichtungen einzeln und gezielt mit Temperiermedium versorgt und bedarfsweise auch vom Temperiermittelstrom getrennt werden können.

Je nach Umgebungstemperatur und Leistungsanforderung können beispielsweise ein Temperiermittelstrom zunächst ausschließlich zu den elektrischen Energiespeicher geleitet werden und dort je nach Umgebungstemperaturen die elektrischen Energiespeicher kühlen oder erwärmen. Bei hohen Leistungsanforderungen kann ein Kühlmittelstrom zu der Leistungselektronik und auch zu den Elektromotoren geleitet werden, um diese Komponenten zu kühlen. Die Modifikation des Kühlmittelstroms erfolgt dabei mittels des Rotationsventils 1. Dabei kann das Rotationsventil 1 mehrere Magnetventile ersetzen, sodass der Temperierkreislauf kostengünstig herstellbar ist.

Figur 1 zeigt ein Rotationsventil 1 mit einem aus Kunststoff ausgebildeten Ventilgehäuse 2, in dem eine Ventilkammer 3 angeordnet ist. Die Ventilkammer 3 weist eine Kammerwand 4 auf, in die mehrere Fluidöffnungen 5 eingebracht sind. Die Ventilkammer 3 weist stirnseitig eine Aufnahmeöffnung 6 auf und die Ventilkammer 3 nimmt einen Ventilkern 7 auf. Der Ventilkern 7 ist mit einer Kanalstruktur 8 versehen, welche mit den Fluidöffnungen 5 zusammenwirkt. Der Ventilkern 7 ist rotatorisch in der Ventilkammer 3 gelagert und mit einer Antriebswelle 13 versehen, über die der Ventilkern 7 durch einen Aktor in Rotation versetzbar ist. Das Ventilgehäuse 2 und der Ventilkern 7 sind aus Kunststoff ausgebildet und im Spritzgussverfahren hergestellt.

Der Ventilkern 7 ist mehrteilig ausgebildet und weist ein erstes Ventilkernelement 10 und ein zweites Ventilkernelement 11 auf. In das erste Ventilkernelement 10 ist eine erste Kanalstruktur 8' und in das zweite Ventilkernelement 11 eine zweite Kanalstruktur 8" eingebracht. Das erste Ventilkernelement 10 und das zweite Ventilkernelement 11 sind mit der Antriebswelle 9 wirkverbunden. Zwischen der Antriebswelle 9 und dem ersten Ventilkernelement 10 ist eine erste Kupplung 12 und zwischen der Antriebswelle 9 und dem zweiten Ventilkernelement 11 ist eine zweite Kupplung 13 angeordnet. Die erste Kupplung 12 und die zweite Kupplung 13 sind als Freilaufkupplung ausgebildet und so angeordnet, dass der Freilauf der ersten Kupplung 12 in einer ersten Drehrichtung ein Drehmoment überträgt und der Freilauf der zweiten Kupplung 13 in einer zweiten Drehrichtung ein Drehmoment überträgt, die der ersten Drehrichtung entgegengesetzt ist. Dementsprechend bewirkt eine Rotation der Antriebswelle 9 in der ersten Drehrichtung, dass das erste Ventilkernelement 10 rotiert, während die Antriebswelle 9 kein Drehmoment auf das zweite Ventilkernelement 11 überträgt. In der zweiten Drehrichtung wird kein Drehmoment von der Antriebswelle 9 auf das erste Ventilkernelement 10 übertragen und das zweite Ventilkernelement 11 durch Drehmomentübertrag in Rotation versetzt.

Bei der Ausgestaltung gemäß Figur 1 sind das erste Ventilkernelement 10 und das zweite Ventilkernelement 11 in Längsrichtung der Antriebswelle 9 betrachtet übereinander angeordnet. Die Kanalstrukturen 8', 8" stehen jeweils mit Fluidöffnungen 5 in Wirkverbindung.

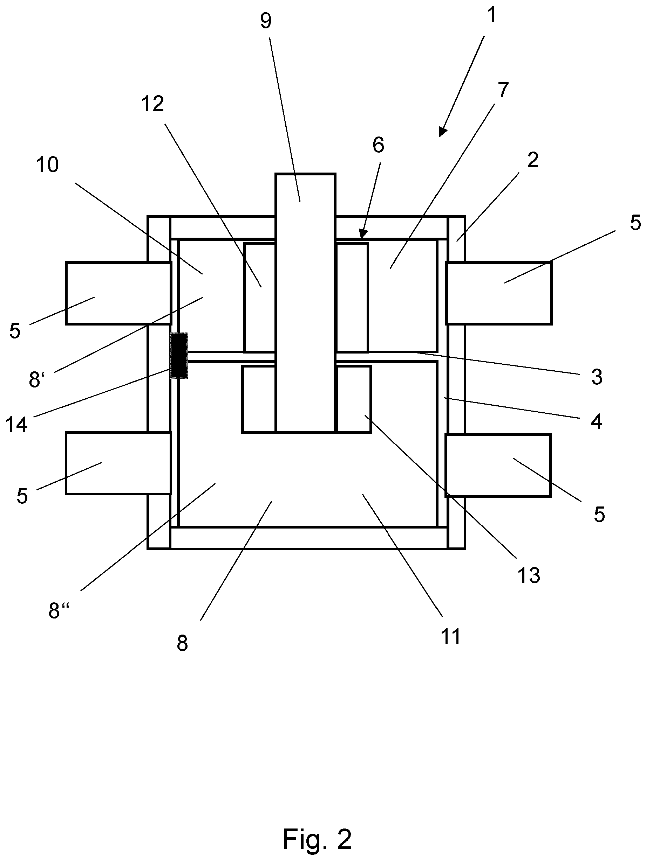

Figur 2 zeigt eine Weiterbildung des in Figur 1 gezeigten Rotationsventils 1. Bei der vorliegenden Ausgestaltung ist das erste Ventilkernelement 10 mit dem zweiten Ventilkernelement 11 über ein Rastmittel 14 wirkverbunden. Das Rastmittel 14 ist als Freilaufkupplung ausgebildet und bewirkt, dass sich das erste Ventilkernelement 10 in einer ersten Drehrichtung unabhängig von dem zweiten Ventilkernelement 11 verdrehen kann, wohingegen beide Ventilkernelemente 10, 11 in einer zweiten Drehrichtung durch Drehmomentübertrag über das Rastmittel 14 gleichermaßen rotieren. Bei dieser Ausgestaltung ist das erste Ventilkernelement 10 über die erste Kupplung 12 und das zweite Ventilkernelement 11 über die zweite Kupplung 13 mit der Antriebswelle 9 verbunden. Eine Rotation der Antriebswelle 9 in einer ersten Drehrichtung bewirkt, dass sich lediglich ein Ventilkernelement 10 verdreht, wohingegen sich in der zweiten Drehrichtung durch das Sperren des Rastmittels 14 beide Ventilkernelemente 10, 11 gleichermaßen verdrehen.

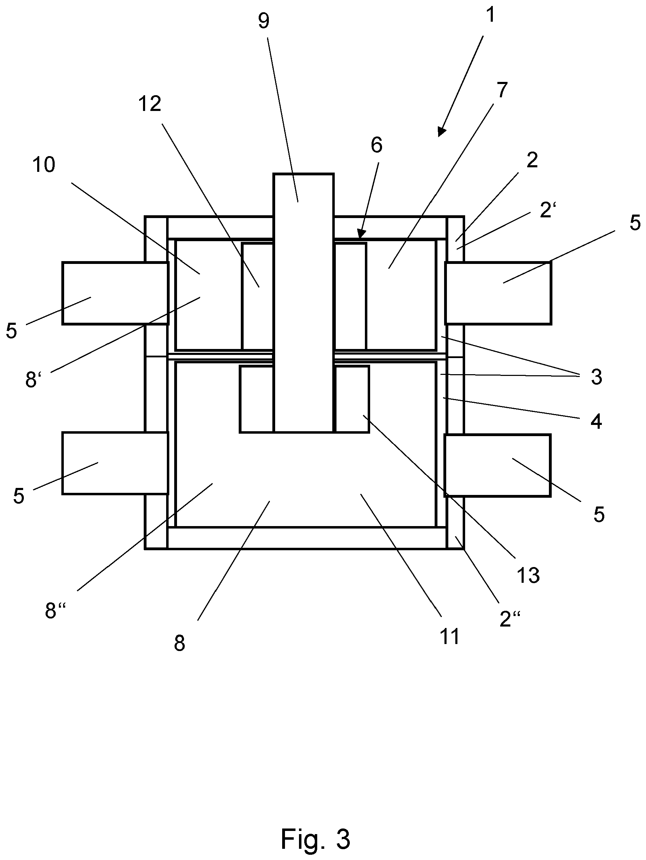

Figur 3 zeigt eine Weiterbildung des in Figur 1 gezeigten Rotationsventils 1. Bei dieser Ausgestaltung ist das Ventilgehäuse 2 mehrteilig ausgebildet und weist ein erstes Ventilgehäuseelement 2' und ein zweites Ventilgehäuseelement 2" auf. Das erste Ventilkernelement 10 ist dabei in dem ersten Ventilgehäuseelement 2' angeordnet und das zweite Ventilkernelement 11 in dem zweiten Ventilgehäuseelement 2".

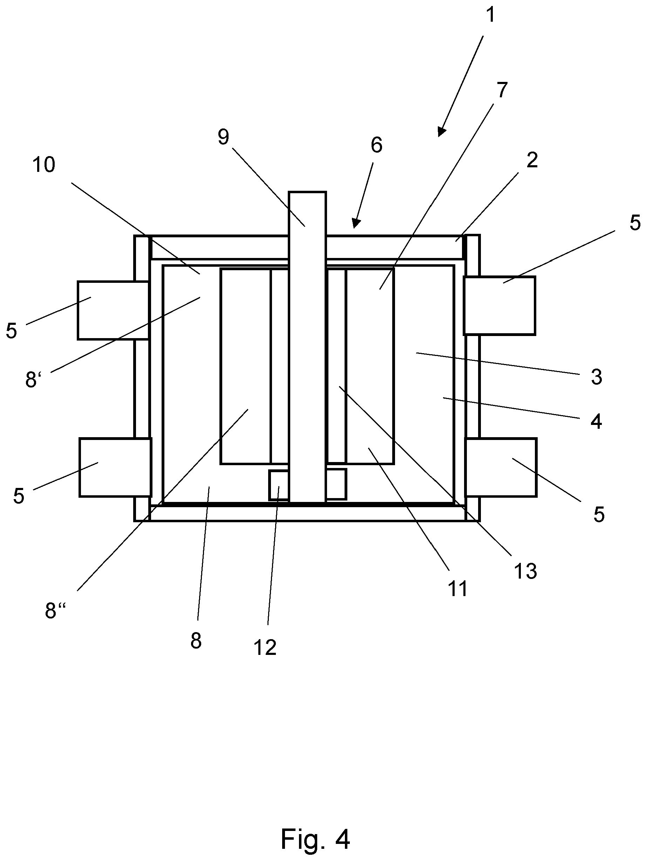

Figur 4 zeigt ein Rotationsventil 1 mit einem aus Kunststoff ausgebildeten Ventilgehäuse 2, in dem eine Ventilkammer 3 angeordnet ist. Die Ventilkammer 3 weist eine Kammerwand 4 auf, in die mehrere Fluidöffnungen 5 eingebracht sind. Die Ventilkammer 3 weist stirnseitig eine Aufnahmeöffnung 6 auf und die Ventilkammer 3 nimmt einen Ventilkern 7 auf. Der Ventilkern 7 ist mit einer Kanalstruktur 8 versehen, welche mit den Fluidöffnungen 5 zusammenwirkt. Der Ventilkern 7 ist rotatorisch in der Ventilkammer 3 gelagert und mit einer Antriebswelle 13 versehen, über die der Ventilkern 7 durch einen Aktor in Rotation versetzbar ist.

Der Ventilkern 7 ist mehrteilig ausgebildet und weist ein erstes Ventilkernelement 10 und ein zweites Ventilkernelement 11 auf. In das erste Ventilkernelement 10 ist eine erste Kanalstruktur 8' und in das zweite Ventilkernelement 11 eine zweite Kanalstruktur 8" eingebracht. Das erste Ventilkernelement 10 und das zweite Ventilkernelement 11 sind mit der Antriebswelle 9 wirkverbunden. Zwischen der Antriebswelle 9 und dem ersten Ventilkernelement 10 ist eine erste Kupplung 12 und zwischen der Antriebswelle 9 und dem zweiten Ventilkernelement 11 ist eine zweite Kupplung 13 angeordnet. Die erste Kupplung 12 und die zweite Kupplung 13 sind als Freilaufkupplung ausgebildet und so angeordnet, dass der Freilauf der ersten Kupplung 12 in einer ersten Drehrichtung sperrt und der Freilauf der zweiten Kupplung 13 in einer zweiten Drehrichtung sperrt, die der ersten Drehrichtung entgegengesetzt ist. Dementsprechend bewirkt eine Rotation der Antriebswelle in der ersten Drehrichtung, dass das erste Ventilkernelement 10 rotiert, während die Antriebswelle 9 kein Drehmoment auf das zweite Ventilkernelement 11 überträgt. In der zweiten Drehrichtung wird kein Drehmoment von der Antriebswelle 9 auf das erste Ventilkernelement 10 übertragen und das zweite Ventilkernelement 11 durch Drehmomentübertrag in Rotation versetzt.

Bei der Ausgestaltung gemäß Figur 4 sind das erste Ventilkernelement 10 und das zweite Ventilkernelement 11 ineinander geschachtelt sind. Hierzu ist in das erste Ventilkernelement 10 eine konzentrische Ausnehmung eingebracht, in welcher das zweite Ventilkernelement 11 angeordnet ist. Dabei stehen die beiden Kanalstrukturen 8', 8" miteinander in Wirkverbindung.

## Patentansprüche

1. Rotationsventil (1), umfassend ein Ventilgehäuse (2) mit einer Ventilkammer (3), wobei die Ventilkammer (3) eine Kammerwand (4) aufweist, in die zumindest zwei Fluidöffnungen (5) eingebracht sind, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch in der Ventilkammer (3) gelagert und über eine Antriebswelle (9) in Rotation versetzbar ist, wobei der Ventilkern (7) mehrteilig ausgebildet ist und zumindest ein erstes Ventilkernelement (10) und ein zweites Ventilkernelement (11) aufweist, wobei das erste Ventilkernelement (10) eine erste Kanalstruktur (8') und das zweite Ventilkernelement (11) eine zweite Kanalstruktur (8") aufweist, wobei das erste Ventilkernelement (10) und das zweite Ventilkernelement (11) mit der Antriebswelle (9) wirkverbunden sind, wobei das erste Ventilkernelement (10) über eine erste Kupplung (12) mit der Antriebswelle (9) wirkverbunden ist und wobei das zweite Ventilkernelement (11) über eine zweite Kupplung (13) mit der Antriebswelle (9) wirkverbunden ist, wobei die erste Kupplung (12) und die zweite Kupplung (13) als Freilaufkupplung ausgebildet sind und der Freilauf der ersten Kupplung (12) in einer ersten Drehrichtung ein Drehmoment überträgt und der Freilauf der zweiten Kupplung (13) in einer zweiten Drehrichtung, die der ersten Drehrichtung entgegengesetzt ist, ein Drehmoment überträgt,
**dadurch gekennzeichnet, dass**
das erste Ventilkernelement (10) und das zweite Ventilkernelement (11) über ein Rastmittel (14) miteinander wirkverbunden sind.

2. Rotationsventil nach Anspruch 1, **dadurch gekennzeichnet, dass** das erste Ventilkernelement (10) und das zweite Ventilkernelement (11) in Richtung der Rotationsachse betrachtet übereinander angeordnet sind.

3. Rotationsventil nach Anspruch 1 oder 2, **dadurch gekennzeichnet, dass** das erste Ventilkernelement (10) und das zweite Ventilkernelement (11) radial ineinander geschachtelt sind.

4. Rotationsventil nach einem der Ansprüche 1 bis 3, **dadurch gekennzeichnet, dass** das Ventilgehäuse (2) mehrteilig ausgebildet ist.

5. Rotationsventil nach Anspruch 4, **dadurch gekennzeichnet, dass** ein erstes Ventilgehäuseelement (2') das erste Ventilkernelement (10) und ein zweites Ventilgehäuseelement (2") das zweite Ventilkernelement (11) aufnimmt.

6. Temperierkreislauf eines Fahrzeugs, umfassend ein Rotationsventil (1) nach einem der vorherigen Ansprüche.

7. Temperierkreislauf nach Anspruch 6, **dadurch gekennzeichnet, dass** das Fahrzeug ein elektronisch angetriebenes Fahrzeug ist.

## Claims

1. Rotary valve (1) comprising a valve housing (2) with a valve chamber (3), wherein the valve chamber (3) has a chamber wall (4) into which at least two fluid openings (5) are introduced, wherein the valve chamber (3) accommodates a valve core (7), wherein the valve core (7) is provided with a channel structure (8) which interacts with the fluid openings (5), wherein the valve core (7) is rotatably mounted in the valve chamber (3) and can be set in rotation via a drive shaft (9), wherein the valve core (7) is designed in multiple parts and has at least a first valve core element (10) and a second valve core element (11), wherein the first valve core element (10) has a first channel structure (8') and the second valve core element (11) has a second channel structure (8"), wherein the first valve core element (10) and the second valve core element (11) are operatively connected to the drive shaft (9), wherein the first valve core element (10) is operatively connected to the drive shaft (9) via a first clutch (12) and wherein the second valve core element (11) is operatively connected to the drive shaft (9) via a second clutch (13), wherein the first clutch (12) and the second clutch (13) are designed as a freewheel clutch, and the freewheel of the first clutch (12) transmits a torque in a first direction of rotation and the freewheel of the second clutch (13) transmits a torque in a second direction of rotation which is opposite the first direction of rotation,
**characterized in that**
the first valve core element (10) and the second valve core element (11) are operatively connected to one another via a latching means (14).

2. Rotary valve according to claim 1, **characterized in that** the first valve core element (10) and the second valve core element (11) are arranged one above the other when viewed in the direction of the rotation axis.

3. Rotary valve according to claim 1 or claim 2, **characterized in that** the first valve core element (10) and the second valve core element (11) are nested radially within one another.

4. Rotary valve according to any of claims 1 to 3, **characterized in that** the valve housing (2) is designed in multiple parts.

5. Rotary valve according to claim 4, **characterized in that** a first valve housing element (2') accommodates the first valve core element (10), and a second valve housing element (2") accommodates the second valve core element (11).

6. Temperature control circuit of a vehicle, comprising a rotary valve (1) according to any of the preceding claims.

7. Temperature control circuit according to claim 6, **characterized in that** the vehicle is an electronically driven vehicle.

## Revendications

1. Soupape rotative (1), comprenant un boîtier de soupape (2) comportant une chambre de soupape (3), dans lequel la chambre de soupape (3) présente une paroi de chambre (4) dans laquelle sont ménagées au moins deux ouvertures pour fluide (5), dans laquelle la chambre de soupape (3) reçoit un noyau de soupape (7), dans laquelle le noyau de soupape (7) est pourvu d'une structure formant canal (8) qui coopère avec les ouvertures pour fluide (5), dans laquelle le noyau de soupape (7) est monté rotatif dans la chambre de soupape (3) et peut être mis en rotation par l'intermédiaire d'un arbre d'entraînement (9), dans laquelle le noyau de soupape (7) est réalisé en plusieurs parties et présente au moins un premier élément de noyau de soupape (10) et un second élément de noyau de soupape (11), dans laquelle le premier élément de noyau de soupape (10) présente une première structure formant canal (8') et le second élément de noyau de soupape (11) présente une seconde structure formant canal (8"), dans laquelle le premier élément de noyau de soupape (10) et le second élément de noyau de soupape (11) sont en liaison fonctionnelle avec l'arbre d'entraînement (9), dans laquelle le premier élément de noyau de soupape (10) est en liaison fonctionnelle avec l'arbre d'entraînement (9) par l'intermédiaire d'un premier accouplement (12) et dans laquelle le second élément de noyau de soupape (11) est en liaison fonctionnelle avec l'arbre d'entraînement (9) par l'intermédiaire d'un second accouplement (13), dans laquelle le premier accouplement (12) et le second accouplement (13) sont réalisés comme des accouplements à roue libre et la roue libre du premier accouplement (12) transmet un couple de rotation dans un premier sens de rotation et la roue libre du second accouplement (13) transmet un couple de rotation dans un second sens de rotation qui est opposé au premier sens de rotation,
**caractérisée en ce que**
le premier élément de noyau de soupape (10) et le second élément de noyau de soupape (11) sont reliés fonctionnellement entre eux par l'intermédiaire d'un moyen d'encliquetage (14).

2. Soupape rotative selon la revendication 1, **caractérisée en ce que** le premier élément de noyau de soupape (10) et le second élément de noyau de soupape (11) sont disposés l'un au-dessus de l'autre, vus en direction de l'axe de rotation.

3. Soupape rotative selon la revendication 1 ou 2, **caractérisée en ce que** le premier élément de noyau de soupape (10) et le second élément de noyau de soupape (11) sont imbriqués radialement l'un dans l'autre.

4. Soupape rotative selon l'une des revendications 1 à 3,
**caractérisée en ce que** le boîtier de soupape (2) est réalisé en plusieurs parties.

5. Soupape rotative selon la revendication 4, **caractérisée en ce qu'**un premier élément de corps de soupape (2') reçoit le premier élément de noyau de soupape (10) et un second élément de corps de soupape (2") reçoit le second élément de noyau de soupape (11).

6. Circuit de régulation de température d'un véhicule, comprenant une soupape rotative (1) selon l'une des revendications précédentes.

7. Circuit de régulation de température selon la revendication 6,
**caractérisé en ce que** le véhicule est un véhicule à propulsion électronique.
